# EUROPEAN PATENT APPLICATION

(11) **EP 3 591 219 A1**
(43) Date of publication of application: **08.01.2020**
(21) Application number: 18461574.8
(22) Date of filing: 06.07.2018
(51) Int. Cl.: F03D 3/06

(54) **A VERTICAL AXIS WIND TURBINE**

(71) Applicant: Lukasiewicz, Bogdan, 93-460 Lodz (PL)
(72) Inventor: Lukasiewicz, Bogdan, 93-460 Lodz (PL)
(74) Representative: Kancelaria Eupatent.pl Sp. z.o.o

(57) **Abstract**

A vertical axis wind turbine (1) comprising: a base (3); a support (10) having a beam (14); a shaft (16) which is rotary assembled in a lower head (8) positioned on the base (3) and in an upper head (15) positioned on the beam (14) of the support (10); a power generator (9) coupled to the shaft (16); a sail (2) comprising two helically shaped sail blades (2A, 2B) mounted on a plurality of arcuate arms (17) fastened to the shaft (16); wherein the arms (17) are fastened to the shaft (16) in such a way that adjacent pairs (27) of the arms (17) for fastening the sail blades (2A, 2B) are shifted angularly relative to each other with respect to the axis of rotation (4).

## Description

### TECHNICAL FIELD

The present disclosure relates to a vertical axis wind turbine.

### BACKGROUND

Nowadays, renewable sources of energy are commonly used to produce electricity. Wind turbines are known to use wind energy. There are known in the art wind turbines having a horizontal axis of rotation (HAWT) or a vertical axis of rotation (VAWT). Horizontal axis wind turbines are most often used when high power is required. Vertical axis wind turbines are used to produce low power. The designs of wind turbines known from the prior art are differentiated with respect to a carrying structure, a sail or a propeller and a main shaft.

Electric photosensitive panels are known to make use of solar energy. It is possible to combine electricity generation methods, for example in a single power producing apparatus one may combine generation of electricity from wind energy and solar energy. Such hybrid solutions provide the opportunity to produce energy simultaneously by using two methods on the same apparatus, which increases the guarantee of energy production and the certainty of obtaining it.

### SUMMARY

The object of the invention is a vertical axis wind turbine comprising: a base, a support having an beam, a shaft which is rotary assembled in a lower head positioned on the base and in an upper head positioned on the beam of the support, a power generator coupled to the shaft, a sail comprising two helically shaped sail blades mounted on a plurality of arcuate arms fastened to the shaft, wherein the arms are mounted to the shaft in such a way that adjacent pairs of the arms for fastening the sail blades are shifted angularly relative to each other with respect to the axis of rotation.

The turbine may have an arm having an outer surface which has at least two curvatures of different radii.

The turbine may have an arm having an outer surface which has three curvatures of different radii.

The turbine may have the radius of an outer surface of a middle part that is bigger than the radius of an outer surface of an inner part and the radius of an outer surface of an outer part.

The arm may have a rib positioned transversely to the outer surface, the rib extending along the inner part, the middle part and the outer part of the arm.

The rib may have a variable width along its length.

The rib may have a constant width along its length.

The rib may have a variable thickness along its length.

The rib may have a constant thickness along its length.

The arms of the pair may be the same.

The shaft may comprise a plurality of segments.

The segment may have the shape of a tube and have connectors for screwing the segments together.

The arms may be mounted between the connectors of the segments.

The base of the turbine may be provided with anchor holes for anchoring the turbine to the ground by means of anchoring screws.

The turbine may have solar panels positioned on the support.

The sail may be coated with photosensitive polymer.

The sail may be coated with photosensitive polymer on both sides of the sail blades.

The vertical axis wind turbine as disclosed herein has a simple modular construction, which enables its relatively simple assembly and change of the turbine configuration.

The turbine disclosed herein is not permanently connected to the ground and therefore does not have to comply with all building construction law restrictions and other environmental or urban restrictions. The turbine may operate in the energy system as a power generator and in combination with an ionic battery it may operate as an island, providing electricity in accordance with particular standards. The turbine may contain specific elements with proprietary patent protection, such as a low-speed generator, a photosensitive fluoro-polymer and a method of its attachment to a turbine sail. The optimal economic and technical power of the Hybrid Turbine is 25-100 KW at a turbine height of 12-23 m and a rotor diameter of 4-7.5 m which requires the use of special carrying structures that enable safe and efficient operation of the turbine for a long-term use up to 25 years.

### BRIEF DESCRIPTION OF DRAWINGS

The turbine has been described in more detail in by means of an embodiment and shown in a drawing, in which
Fig. 1 shows a wind turbine in a front view;
Fig. 2 shows the wind turbine in a top view;
Fig. 3a shows an arm for fastening a sail blade;
Figs. 3b and 3c are sectional views of the arm shown in Fig. 3a;
Fig. 4a shows a turbine sail;
Fig. 4b shows a pair of arms of Fig. 3a;
Fig. 4c shows a cross-section through the turbine shaft at a fastening location of the first pair of arms;
Fig. 4d shows a cross-section through the turbine shaft at a fastening location of the second pair of arms;
Fig. 4e shows a cross-section through the turbine shaft at a fastening location of the last pair of arms;
Fig. 5a shows a segment of the turbine shaft in a direction perpendicular to the axis of the turbine;
Fig. 5b shows axial views of the segment of Fig. 5a;
Fig. 5c shows two adjacent pairs of arms;
Figs. 6a, 6b, 6c show air flow through sail blades at various positions;
Fig. 7 shows a wind turbine in a front view;
Fig. 8 shows a cross-section through a turbine support;
Fig. 9 shows a cross-section through the lower head;
Fig. 10 shows a cross-section through coupling of a shaft of the lower head of Fig. 9 and a generator.

### DETAILED DESCRIPTION

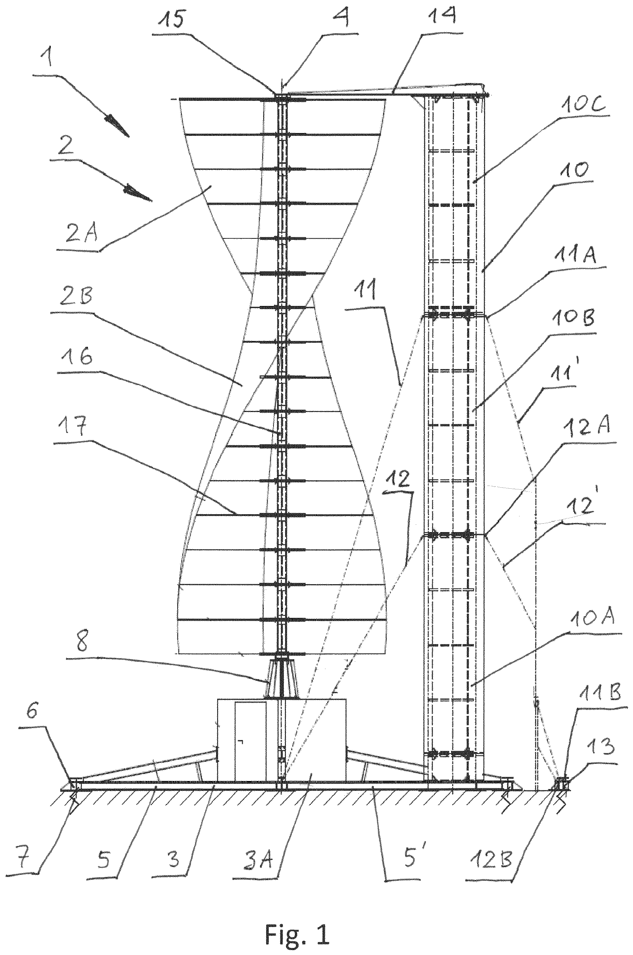

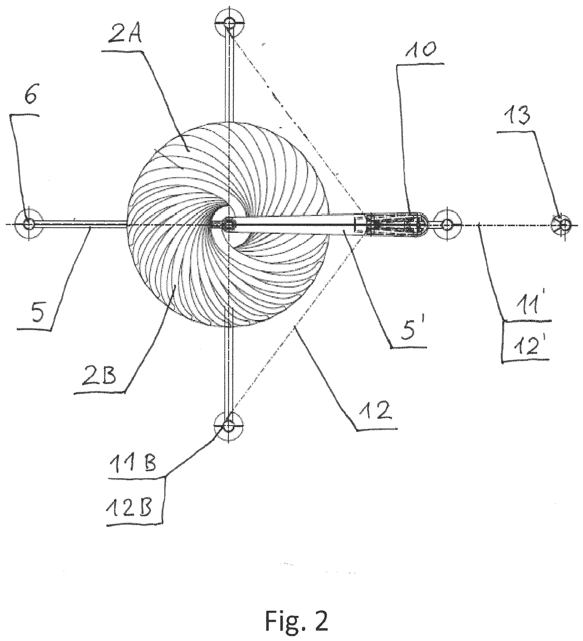

A wind turbine 1 presented in fig. 1 and 2 comprises a rotary assembled sail 2, a base 3 and a plinth 3A mounted thereon, the sail 2 comprising two twisted sail blades 2A and 2B rotates around an axis 4. The axis 4 of the sail 2, being also an axis of the turbine 1, may be situated generally vertically or at a certain angle in relation to the vertical direction. In the presented embodiment the base 3 comprises four feet 5 which may be screwed to each other or welded. In the feet 5 there are provided anchor holes 6 which are used to anchor the base 3 to the ground by means of anchoring screws 7. The base 3 may have any number of feet arranged radially or in any other manner. The turbine may be relocated between places of operation and each time may be anchored to the ground. The base 3 of the turbine 1 may have any form and may be immobilized on the ground in any manner, whereas the plinth 3A may constitute an inherent part of the base 3.

On the plinth 3A there is situated a lower head 8 which comprises a lower bearing assembly for the sail 2. A power generator 9 (e.g. a current generator) and a clutch are situated in the plinth 3A underneath the lower head 8 (the generator is not visible in the figure). The wind turbine 1 is further provided with a support 10 which is mounted on one of the feet 5' of the base 3. In the presented embodiment the support 10 consists of three parts 10A, 10B i 10C. On the uppermost part 10C there is mounted a beam 14, at the end of which there is mounted an upper head 15 which includes an upper bearing assembly. The parts 10A, 10B, 10C may be screwed together or assembled in any other manner. The axis 4 of the sail 2 extends between the lower head 8 and the upper head 15. The carrying structure element of the sail 2 is a shaft 16. There are arms 17 mounted on the shaft 16. The sail blades 2A and 2B are stretched on the arms 17. The shaft 16 may be made as a unitary shaft or a segmented shaft. The support 10 is provided with tensioning cables 11, 12 stretched between the grips 11A and 12A attached to the supports 10 and grips 11B and 12B attached to the feet 5. An additional anchoring element 13 is set to the ground by means of an anchoring screw 7, on the anchoring element 13 are fastened the grips 11B and 12B for the shaft 16 that may be made as a unitary shaft or a segmented shaft. The support 10 is provided with tensioning cables 11 'and 12'.

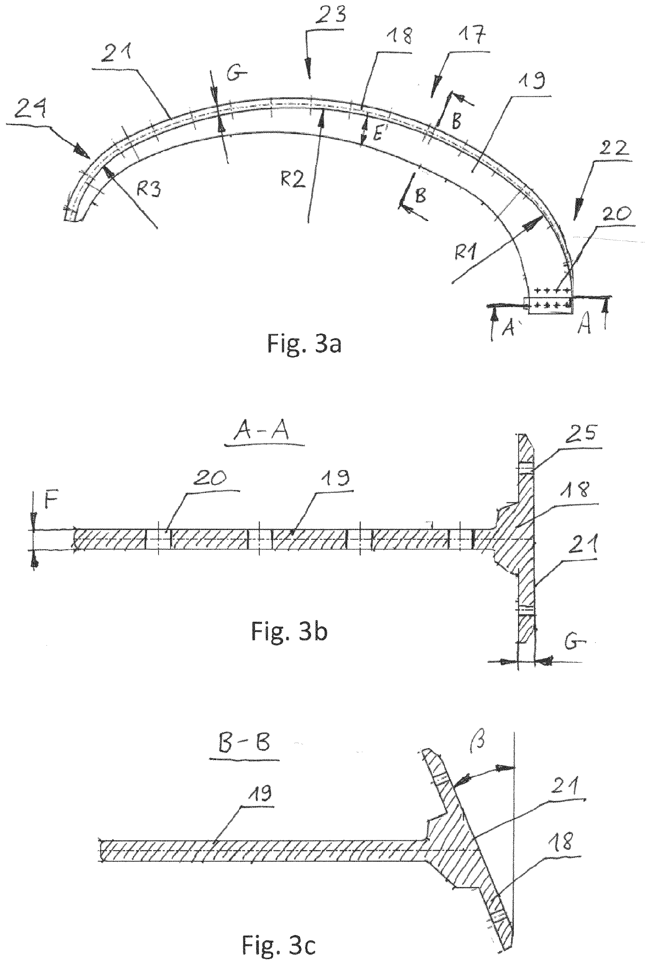

As shown in Fig. 3a, the arm 17 has an arcuate element 18 and a rib 19 having mounting holes 20 used to fasten the arm 17 to the shaft 16. The arcuate element 18 has an outer surface 21 onto which the sail blades 2A, 2B are fixed. The arm 17 consists of an inner part 22 positioned in the assembled sail closer to the axis 4 of the sail 2, a middle part 23 and an outer part 24 located in the assembled sail away from the axis 4. The rib 19 extends along the entire length of the arm 17, i.e. along parts 22, 23 and 24. The fastening holes 20 are made in the inner part 22. The arm 17 may have one or more curvatures. In the presented embodiment, the arm 17 has three curvatures. In the inner part 22, the arm 17 has the first curvature of a radius R1, in the middle part 23 the arm 17 has the second curvature of a radius R2 greater than the radius R1, further in the outer part 24 the arm 17 has the third curvature of a radius R3. The radius R2 is greater than each of the radii R1 and R3, wherein the radii R1 and R3 have values similar to each other. The thickness G of the arcuate element 18 may be constant along the entire length of the arcuate element 18 or may be variable. The rib 19 has a shape adapted to the curvature of the arm 17, wherein the width E of the rib 19 may be constant along the entire length of the arm 17 or may variable as in the shown embodiment. A cross-section A-A of the arm 17 indicated in Fig. 3a is shown in Fig. 3b. The thickness F of the rib 19 may be constant or variable along its entire length. In the cross-section A-A there are visible fastening holes 20 for mounting the arm 17 to the shaft 16 and fastening holes 25 for fixing the sail blades 2A or 2B by riveting or in any other way. The holes 25 are evenly distributed over the arcuate element 18. In FIG. 3c, in the cross-section B-B indicated in Fig. 3a, there is shown the arcuate element 18 being deflected by an angle β from the vertical. The angle β varies along the length of the arm 17 which is needed to adjust the outer surface 21 to the helical surface of the sail blades 2A and 2B.

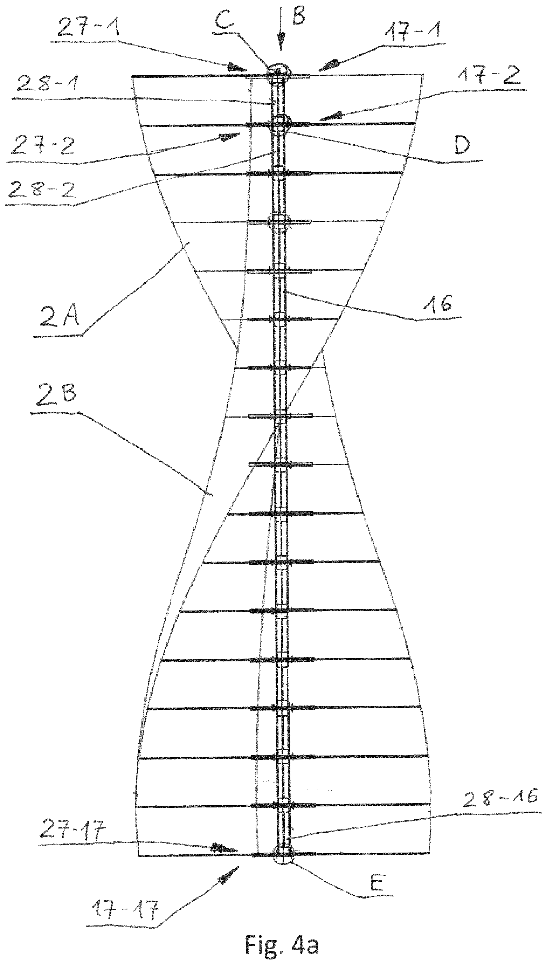

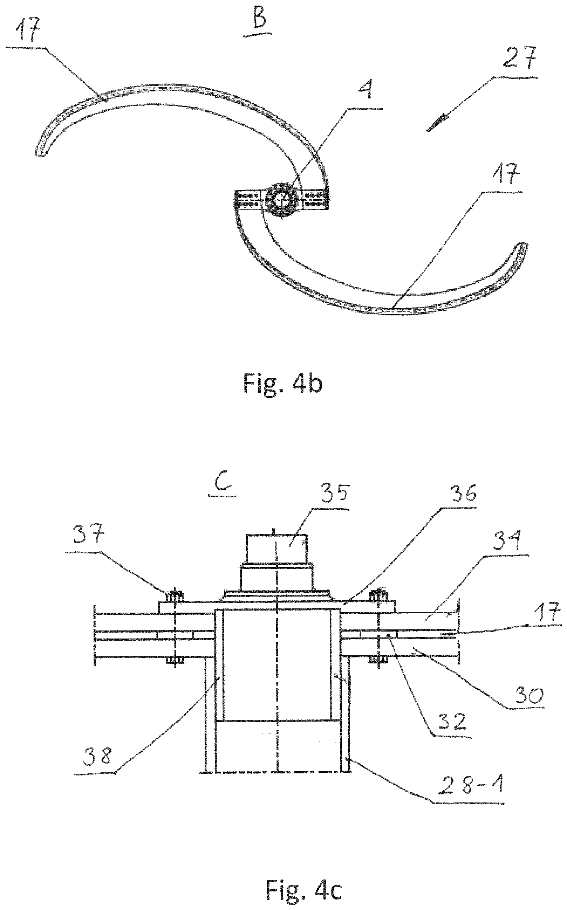

The sail 2 is shaped helically. The sail blades 2A and 2B are the same and are angularly shifted in relation to each other by an angle of 180 degrees with respect to the axis 4. In other words, they are arranged radially in opposite directions. The entire shaft 16 having the sail blades 2A and 2B mounted thereon is shown in Fig. 4a. The sail blades 2A and 2B of the sail 2 are fastened to a plurality of pairs 27 of the arms 17 mounted on the axis 4 as shown in view B in Fig. 4b.

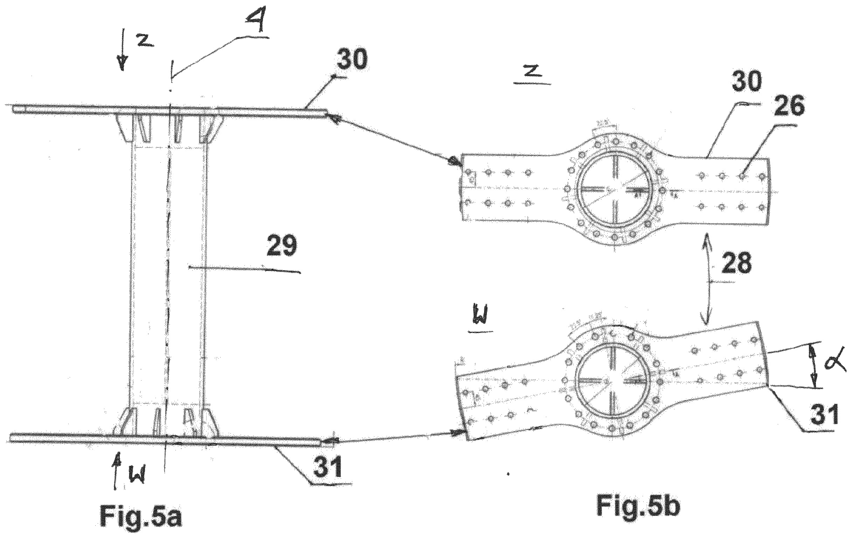

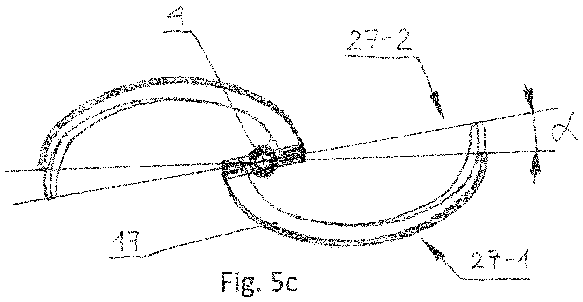

Each two adjacent pairs 27 of the arms 17 are angularly shifted relative to each other, as shown in Fig. 5c for the first pair 27-1 and the second pair 27-2, the second pair 27-2 being angularly shifted relative to the first pair 27-1 by an angle a. This means that each successive arm 17 for one sail blade 2A, 2B is angularly shifted with respect to the axis 4 in relation to the previous arm 17 in such a way that the first-uppermost positioned arm 17-1 (Fig. 4a) is angularly shifted in relation to the last - lowermost positioned shoulder 17-17 by an angle of 360 degrees. In other words, each successive pair of the arms 17 is shifted angularly with respect to the axis 4 in relation to the previous pair 27 of the arms 17 in such a way that the first (uppermost positioned) pair 27-1 is shifted angularly relative to the last (lowermost) pair 27-17 by an angle of 360 degrees. In the embodiment shown, the shaft 16 consists of a plurality of segments 28 arranged for mounting the pairs 27 of the arms 17. The segment 28 consists of a distance 29 in the form of a sleeve (Fig. 5a), to which an upper connector 30 and a lower connector 31 are fastened. In the shown embodiment the distance and the connectors are welded. The connectors 30, 31 have the form of plates in which holes 26 are provided for fastening the arms 17. At one end of the distance 29 a pair of upper links 30 is arranged and a pair of lower links 31 is arranged at the other end. Fig. 5a shows a view of a single segment 28 in a direction perpendicular to the axis 4 of the turbine, while Fig. 5b shows the segment 28 in two views z and w in the axial direction. The upper connector 30 and the lower connector 31 may be the same. The upper connector 30 has an angular position relative to the lower connector 31 shifted angularly by an angle α with respect to the axis 4. The shaft 16 is assembled by screwing together the segments 28 with the arms 17 and the elements cooperating with the lower head 8 and the upper head 15. In the presented embodiment (Fig. 4a) the shaft 16 has sixteen segments 28, whereas any other number of segments is available. In the presented embodiment for the shaft 16 having sixteen segments 28, the pair 27 of the arms 17 is shifted by the angle α equal to 22.5 °, while for the shaft 16 having twelve segments the angle α equals 30 °.

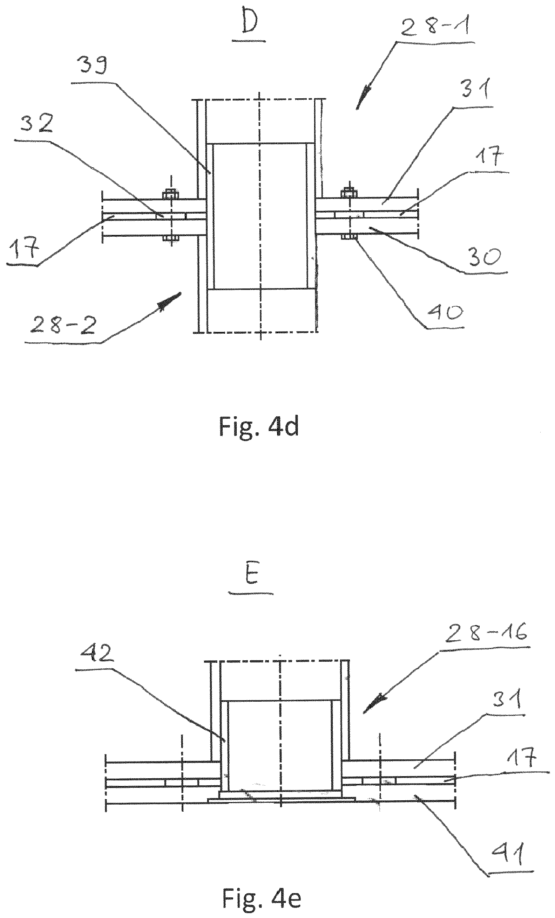

The first (uppermost) pair 27-1 of the arms 17 shown in Fig. 4a is mounted between the upper connectors 30 of the segment 28-1 and the plate 34, as shown in the enlargement C in Fig. 4c. A pivot 35 having a disc 36 is attached to the plate 34. All of the mentioned elements are screwed by means of screws 37, additionally spacers 32 are used. In the assembled turbine 1, the pivot 35 is located in the upper head 15. The coaxiality of the segment 28-1 with the plate 34 and the disc 36 of the pivot 35 is provided by the first centering sleeve 38. The second pair 27-2 of the arms 17 and the further pairs downwards along the shaft 16 together with the lowermost pair 17-16 are mounted in the same way. As shown in enlargement D in Fig. 4d, the second pair 27-2 of the arms 17 is fixed between the lower connectors 31 of the segment 28-1 and the upper connectors 30 of the segment 28-2. The lower connectors 31, the upper connectors 30 and the arms 17 are fastened by means of screws 40. Additionally, spacers 32 are provided. The coaxiality of the segment 28-2 with the segment 28-1 is provided by the second centering sleeve 39. The last (lowermost) pair 27-17 is fastened between a plate 41 and lower connectors 31 of segment 28-16, as shown in an enlargement E in Fig. 4e. The coaxiality of the segment 28-16 with a hole in the plate 41 is provided by the third centering sleeve 42. The plate 41 is adapted to be connected to the shaft of the lower head 8. The construction of the lower head will be described in the further part of the description.

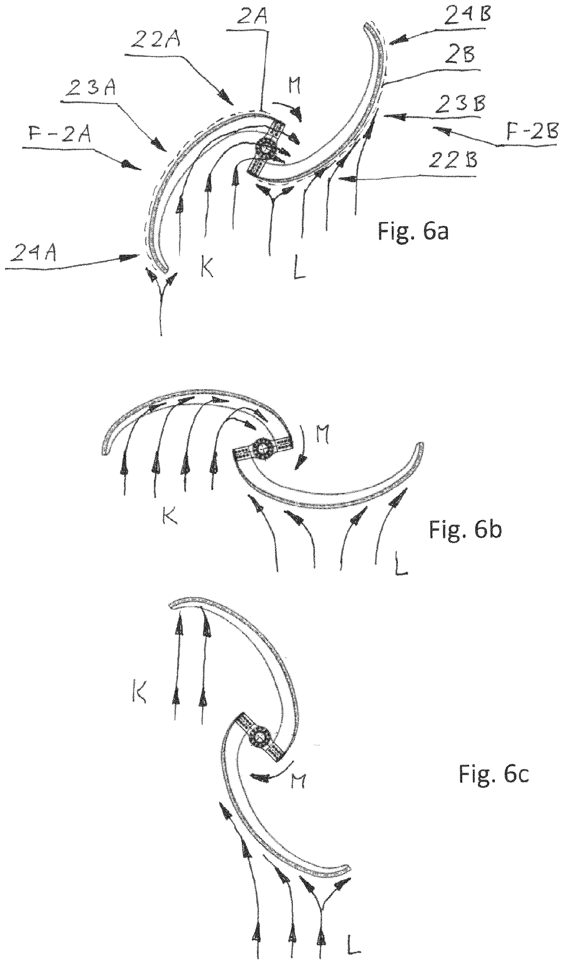

Figs. 6a, 6b, 6c show examples of angular positions of fragments of sail blades 2A and 2B during operation of the turbine 1. The fragment F-2A of the sail blade 2A includes an inner portion 22A, a middle portion 23A and an outer portion 24A. The fragment F-2B of the panel 2B includes an inner portion 22B, a middle portion 23B and an outer portion 24B. For the purpose of this description, the air stream which is directed towards the fragments of the sail blades 2A and 2B has been divided into two streams K and L. The stream K increases the torque M, which drives the turbine, having an impact on the sail 2 in a clockwise direction, while the flow L reduces the torque M by having an impact on the sail 2 in a counter-clockwise direction. In the position of Fig. 6a, the stream K is directed onto the inner portion 22A, the middle portion 23A and the outer portion 24A. The air pressure on the inner portion 22A is directed at least partially at an angle close to the right angle, thus the force exerted by this part of the stream is effectively converted into the torque M which acts on the sail blade 2A. The stream K, after draining off the inner portion 22A, flows by the axis 4 and is directed towards the inner portion 22B of the sail blade 2B, thus increasing the torque M by acting on the sail blade 2B. The directing of the stream K towards the panel 2B is assisted, i.e. directed by the ribs 19 of the arms 17, namely the adjacent ribs 19 together with the inner surface of the sail blade 2A form air channels. In other words, the flow of the air stream up or down the sail 2 is hindered. The air pressure of the stream K on the middle portion 23A is directed at a small angle to that portion of the fragment F-2A of the sail blade 2A, this part of the stream K flows by the middle portion 23A towards the inner portion 22A and further towards the inner portion 22B of the sail blade 2B increasing the torque M driving the turbine. A portion of the stream K directed onto the outer portion 24A is divided by an outer edge of the sail blade and increases the torque M to a small extent. Part of the stream L directed towards the inner portion 22B is spread over this surface, it is directed at an angle close to the right angle, however, due to acting in the direction close to the axis 4, this part of stream L affects on the sail blade 2B but it does not increase the torque M. A portion of the stream L flows over the middle portion 23B and to some extent reduces the torque M by acting on the sail blade 2B opposite to the flow K. In Fig. 6b the above considered fragments F-2A and F-2B are in a position rotated by a certain angle in clockwise direction in relation to the position of Fig. 6a according to the action of the torque M which drives the turbine. The stream K effectively acts on the sail blade 2A because it is directed on the middle portion 23A at an angle close to the right angle. A portion of the stream K acts on the outer portion 24A and flows onto the middle portion 23A and increases the air pressure of the stream K on the sail blade 2A. A portion of the stream L flows over the inner portion 22B and is directed towards the middle portion 23A and increases the torque acting on the sail blade 2A. The L stream most effectively acts on the center portion 23B and the outer portion 24B and reduces the torque M. Fig. 6c shows a consecutive position of the fragments F-2A and F-2B during operation. The stream K acts on the outer portion 24A and increases the torque M. The L stream effectively acts on the outer portion 24B and reduces the torque M. In this position of the fragments F-2A and F-2B the action of the streams K and L is smaller than in the previously discussed positions. Due to the fact that the sail blades 2A and 2B are helical and the fragments F-2A and F-2B for individual shaft segments have a rotated position with respect to adjacent fragments, the total torque M exerted on the sail 2 has a substantially constant value. The applied radii R1, R2 and R3 of the arms 17 make possible effective utilization of the operating overpressure exerted by the air flow during operation of the sail. As it is shown in Fig. 6a, a small radius R1 makes it possible to efficiently redirect the stream K from the inner portion 22A of the sail blade 2A towards the inner portion 22B of the sail blade 2B. In Fig. 6b, the pressure of the stream K is the greatest, it affects the middle portion 23A having a large radius R2. In a further position of the fragments of the sail blades in Fig. 6c, the distance of the direction of the flow K in relation to the axis 4 is reduced, therefore applying a small radius R3 is advantageous. The turbine may be additionally equipped with solar panels, i.e. photosensitive panels, for generating electricity from the solar radiation energy. The solar panels may be located on the support 10, wherein the solar panels may consist of multiple parts.

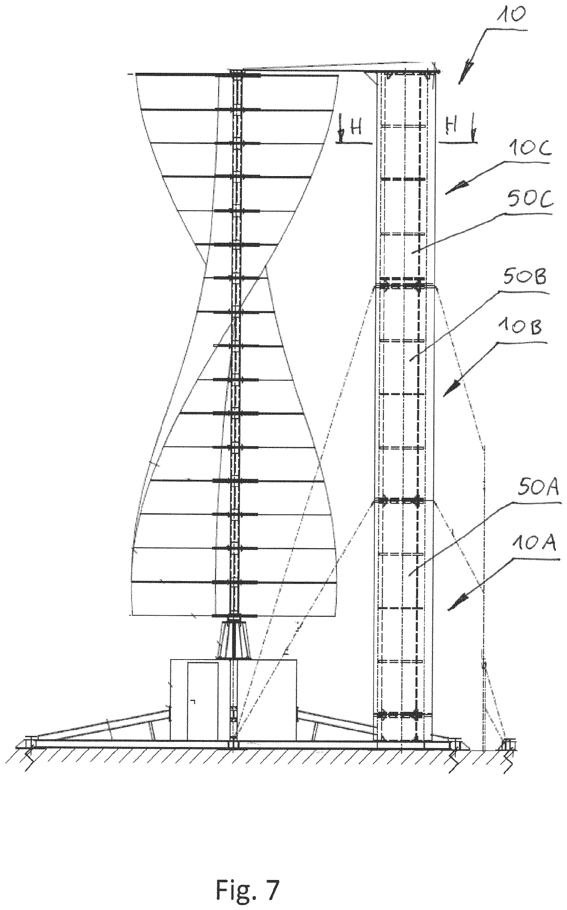

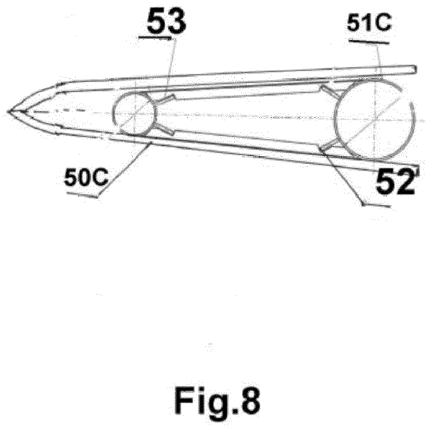

In the embodiment shown in Fig. 1, the panels may be positioned on both sides of the support 10, wherein on each side of the support the panels may consist of three pieces, one piece on each part of the support 10A, 10B and 10C. The solar panels 50A and 51A are attached to the part 10A, respectively panels 50B and 51B are attached to the part 10B and the panels 50C and 51C are attached to the part 10C (Fig. 7). For example, Fig. 8 shows panels 50C and 51C in cross section H-H indicated in Fig. 7. As shown in Fig. 8, solar panels are mounted on sheet metal supports 52 and 53, which are fastened to the support 10. In the shown embodiment solar panels 50, 51 may adjoin the support 10 to form an acute angle between their planes, the solar panels may be positioned in any other way. The solar panels may be flexible. The sail blades 2A, 2B may be made of aluminum, plastic or stainless steel sheet or some other material. The sail blades may be covered with photosensitive polymer on their both inner and outer sides, thanks to which it will be possible to obtain additional electric energy from the solar radiation.

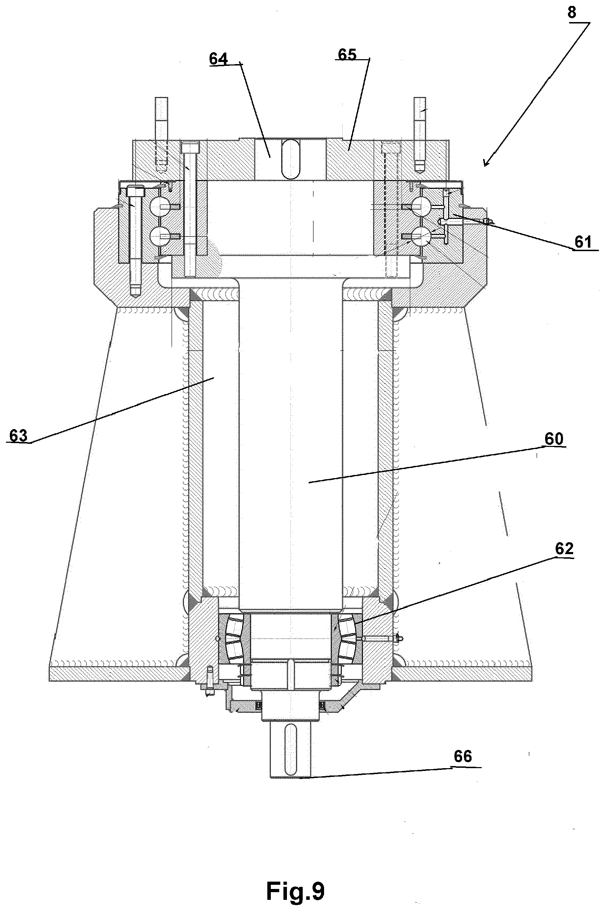

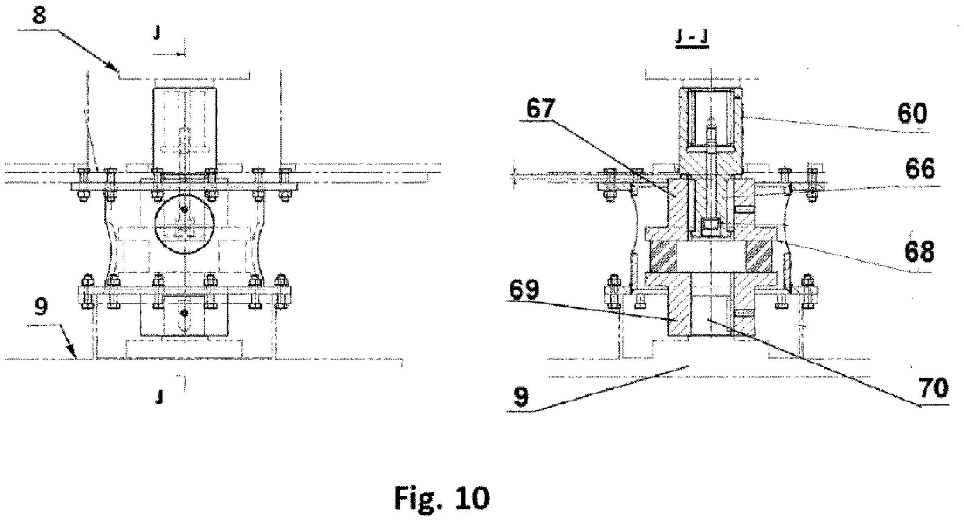

Fig. 9 shows a sectional view of the lower head 8 provided with a shaft 60 on which are mounted a double row ball bearing 61 and a spherical roller bearing 62, which are positioned in a housing 63. A ring 65 is assembled on the spigot 64, the spigot 64 is screwed to the shaft 16. The shaft 60 is connected to the generator 9 by means of a spigot 66. As it is shown in FIG. 10, a sleeve 67 is mounted on the spigot 66, which is fastened to the clutch 68, while the shaft 70 of the generator 9 is fastened to the clutch 68 by means of a sleeve 69.

## Claims

1. A vertical axis wind turbine (1) comprising:
- a base (3);
- a support (10) having a beam (14);
- a shaft (16) which is rotary assembled in a lower head (8) positioned on the base (3) and in an upper head (15) positioned on the beam (14) of the support (10);
- a power generator (9) coupled to the shaft (16);
- a sail (2) comprising two helically shaped sail blades (2A, 2B) mounted on a plurality of arcuate arms (17) fastened to the shaft (16);
- wherein the arms (17) are fastened to the shaft (16) in such a way that adjacent pairs (27) of the arms (17) for fastening the sail blades (2A, 2B) are shifted angularly relative to each other with respect to the axis of rotation (4).

2. The turbine according to claim 1, **characterized in that** an outer surface (21) of the arm (17) has at least two curvatures having different radii (R1, R2).

3. The turbine according to claim 1 or 2, **characterized in that** an outer surface (21) of the arm (17) has three curvatures having different radii (R1, R2, R3).

4. The turbine according to the claim 3, **characterized in that** the radius (R2) of an outer surface (21) of a middle part (23) is bigger than the radius (R1) of an outer surface (21) of an inner part (22) and the radius (R3) of an outer surface (21) of an outer part (24).

5. The turbine according to one of claims 1 to 4, **characterized in that** the arm (17) has a rib (19) positioned transversely to the outer surface (21), the rib (19) extending along the inner part (22), the middle part (23) and the outer part (24) of the arm (17).

6. The turbine according to one of claims 1 to 5, **characterized in that** the rib (19) has a variable width (E) a along its length and/or a variable thickness (F) along its length.

7. The turbine according to one of claims 1 to 5, **characterized in that** the rib (19) has a constant width (E) along its length and/or a constant thickness (F) along its length.

8. The turbine according to one of claims 1 to 7, **characterized in that** the arms (17) of the pair (27) are the same.

9. The turbine according to one of claims 1 to 8, **characterized in that** the shaft (16) comprises a plurality of segments (28).

10. The turbine according to claim 9, **characterized in that** the segment (28) has the shape of a tube and has connectors (30, 31) for screwing the segments (28) together.

11. The turbine according to claim 10, **characterized in that** the arms (17) are mounted between the connectors (30, 31) of the segments (28).

12. The turbine according to one of claims 1 to 11, **characterized in that** the base (3) of the turbine (1) is provided with anchor holes (6) for anchoring the turbine (1) to the ground by means of anchoring screws (7).

13. The turbine according to one of claims 1 to 12, **characterized in that** it has solar panels (50A, 51A, 50B, 51B, 50C, 51C) positioned on the support (10).

14. The turbine according to one of claims 1 to 13, **characterized in that** the sail (2) is coated with a photosensitive polymer.

15. The turbine according to claim 14, **characterized in that** the sail is coated with photosensitive polymer on both sides of the sail blades.
